# EUROPÄISCHE PATENTSCHRIFT

(11) **EP 3 294 961 B1**
(45) Veröffentlichungstag und Bekanntmachung des Hinweises auf die Patenterteilung: **26.06.2019**
(21) Anmeldenummer: 16722880.8
(22) Anmeldetag: 12.05.2016
(51) Int. Cl.: E03C 1/126, E03C 1/28

(54) **VERBESSERTER SELBSTDESINFIZIERENDER GERUCHSVERSCHLUSS MIT BESCHICHTUNG**
IMPROVED SELF-DISINFECTING DRAIN TRAP HAVING A COATING
SIPHON AUTO-DÉSINFECTANT PERFECTIONNÉ DOTÉ D'UN REVÊTEMENT

(30) Priorität: 15.05.2015 DE 102015006278
(43) Veröffentlichungstag der Anmeldung: 21.03.2018
(73) Patentinhaber: Schluttig, Alexander, 02991 Lauta (DE)
(72) Erfinder: Schluttig, Alexander, 02991 Lauta (DE)
(74) Vertreter: Kossak, Sabine
(86) Internationale Anmeldenummer: PCT/EP2016/060767
(87) Internationale Veröffentlichungsnummer: WO 2016/184786

(56) Entgegenhaltungen:
- WO-A1-00/53857
- WO-A2-2006/102015
- DE-A1-102009 042 212
- DE-U1- 9 202 902
- DE-U1-202013 010 964
- US-A1- 2006 272 542

## Beschreibung

Die Erfindung betrifft einen selbstdesinfizierenden Geruchsverschluss für Abwasserleitungen mit den Merkmalen im Oberbegriff von Anspruch 1.

Es ist in klinischen und pflegerischen Einrichtungen seit längerem bekannt, dass Geruchsverschlüsse und die in ihnen befindlichen so genannten Sperrflüssigkeiten pathogene Mikroorganismen enthalten können, die bei der bestimmungsgemäßen Benutzung der Geruchsverschlüsse durch Aerosolbildung in die Umgebungsluft gelangen.

Es wurden Geruchsverschlüsse beschrieben (WO 2000/053857 A1, DE 10 2009 042 212 A1), bei denen während des Betriebes und ohne eine nicht zulässige Unterbrechung der hydraulischen Sperrfunktion die Sperrflüssigkeit und den Geruchsverschluss-Innenraum sowohl selbsttätig mechanisch gereinigt als auch physikalisch desinfiziert werden.

Für diese Geruchsverschlüsse wurde der Begriff "Selbstdesinfizierende Geruchsverschlüsse" (engl./amer.: self-disinfected siphons, self-disinfecting drain traps) gewählt.

Selbstdesinfizierende Geruchsverschlüsse reinigen und entkeimen sich definitionsgemäß selbsttätig und ohne Unterbrechung der Sperrfunktion des Geruchsverschlusses. Damit wird unabhängig von menschlicher Einflussnahme und ohne zusätzlichen Aufwand an Zeit und Arbeitskraft Keimfreiheit der bei bestimmungsgemäßer Benutzung entstehenden Aerosole garantiert.

Diese Selbstdesinfizierenden Geruchsverschlüsse auf der Basis von WO 2000/053857 A1 sind in der Lage, innerhalb von 30 Minuten 10 Millionen Bakterien pro Milliliter Sperrflüssigkeit durch thermische Desinfektion oder UV-C-Bestrahlung vollständig abzutöten (7 Log-Stufen in 30 Minuten) und somit desinfizierte bzw. sterile Sperrflüssigkeiten in Geruchsverschlüssen zu erzeugen (Testprotokoll A 13228as vom 17/12/2013 der Hygiene Nord GmbH).

Diese Selbstdesinfizierenden Geruchsverschlüsse bestehen erfindungsgemäß aus einer Anordnung von Vorrichtungen zur Desinfektion (Hitze, UV-C-Strahlung, Ultraschall) und Reinigung (Vibration). Insbesondere die Kombination von Hitzedesinfektion mit niederfrequenter Vibrationsreinigung hat sich in der klinischen Praxis als außerordentlich wirkungsvoll erwiesen und hat daher zu einem neuen Stand der Technik in der Sanitärhygiene für klinische Hochrisikobereiche geführt (KRAMER, 2013).

Selbstdesinfizierende Geruchsverschlüsse nach dem Stand der Technik (WO 2000/053857 A1, DE 10 2009 042 212 A1) weisen jedoch zwei wesentliche Nachteile auf:
(1) Anreicherung von organischen Zellinhaltsstoffen aus den abgetöteten Mikroorganismen in der desinfizierten Sperrflüssigkeit. Damit kommt es beim Gebrauch des desinfizierten, keimfreien Geruchsverschlusses zur Emission dieser organischen Zellinhaltsstoffe durch Aerosolbildung und deren Verbreitung auf umliegende Flächen und die Hände von Pflegepersonal und Patienten.
   Diese organischen Bestandteile dienen einerseits anderen Mikroben als Nährstoffe und wirken andererseits in Form der Endotoxine und Pyrogene direkt negativ, beispielsweise Entzündungen auslösend, auf den Patienten, wenn sie durch Aerosolbildung aus dem Geruchsverschluss austreten. Diese freigesetzten Zellbestandteile gelangen durch die Aerosolbildung während des bestimmungsgemäßen Gebrauches des Geruchsverschlusses nach außen und damit auf umliegende Flächen. Besonders gefährdet sind dadurch die in der unmittelbaren Nähe des Geruchsverschlusses befindlichen Trinkwasserauslässe (Wasserhähne). Die Ansiedlung von Mikroorganismen auf und in den Trinkwasserauslässen - die so genannte retrograde mikrobielle Kontaminierung - wird durch das Vorhandensein von Nährstoffen, die durch die Aerosolbildung auf den betreffenden Trinkwasserauslass aus dem desinfizierten Siphon transportiert worden sind, wesentlich beschleunigt.
   Die Freisetzung von Wirkstoffen wie Toxinen und Pyrogenen kann auch direkt zur Schädigung von Patienten, vorzugsweise solcher mit Immunsuppressionen und Allergien, führen. So sind Pyrogene beispielsweise in der Lage, "kalte" Infektionen, bei denen alle Symptome der Krankheit vorhanden sind, jedoch kein Erreger nachweisbar ist, hervor zu rufen.
   Die dargestellten Folgen einer fehlenden Beseitigung von Zellinhaltsstoffen in der desinfizierten Sperrflüssigkeit waren zunächst bei der Anwendung der Selbstdesinfizierenden Geruchsverschlüsse nicht vorhersehbar, weil es vor diesen keine Geruchsverschlüsse ohne Mikroorganismen in sehr hohen Konzentrationen in der Sperrflüssigkeit gab. Erst während des mehrjährigen klinischen Gebrauches von Selbstdesinfizierenden Geruchsverschlüssen wurden diese Folgen sichtbar.
(2) Schnelle retrograde mikrobielle Kontamination der desinfizierten Sperrflüssigkeit während der Nichtbenutzung des Geruchsverschlusses. Durch die keimhaltige Raumluft auf der Seite des Zulaufes und durch keimhaltige Gase aus der Abwasserleitung hinter dem Selbstdesinfizierenden Geruchsverschluss im Bereich des Ablaufes gelangen lebende Keime in die desinfizierte Sperrflüssigkeit. Durch den hohen Gehalt an mikrobiellen Nährstoffen in Form der freigesetzten Zellinhaltsstoffe kommt es zu einer schnellen mikrobiellen Neubesiedlung, solange keine Desinfektion durch den erneuten Zulauf von Abwasser gestartet wird. Diese Mikroorganismen gelangen dann beim nächsten Gebrauch des Selbstdesinfizierenden Geruchsverschlusses via Aerosolbildung in die Umgebung.

Diese retrograde mikrobielle Kontaminierung der desinfizierten Sperrflüssigkeit, deren überraschendes Ausmaß und Bedeutung bei Konstruktion und Einführung der Selbstdesinfizierenden Geruchsverschlüsse nach dem Stand der Technik nicht voraussehbar war, stellt in der klinischen Praxis eine erhebliche Sicherheitslücke und damit einen wesentlichen Nachteil bei der Verwendung Selbstdesinfizierender Geruchsverschlüsse nach dem Stand der Technik dar.

Die Aufgabe der Erfindung besteht in der Bereitstellung eines selbstdesinfizierenden Geruchsverschlusses, welcher bei Beibehaltung der hohen Desinfektionskapazität die beschriebenen Nachteile - der Anreicherung mikrobieller Zellinhaltsstoffe in der Sperrflüssigkeit und die schnelle retrograde mikrobielle Kontaminierung der Sperrflüssigkeit durch eine schnelle Vermehrung der über die Luft in die eingetragenen Keime und deren spätere Emission als auch den Austritt von organischen Stoffen via Aerosolbildung bei erneuter Benutzung - nicht mehr aufweist.

Erfindungsgemäß wird diese Aufgabe durch einen selbstdesinfizierenden Geruchsverschlusses gemäß Patentanspruch 1 mit Anwendung einer Titandioxid-Nano-Beschichtung gelöst. Die Anwendung einer katalytisch-oxidativ wirksamen, superhydrophilen Titandioxid-Nano-Beschichtung auf der Innenwand des Geruchsverschlusskörpers ermöglicht die katalytische Oxidation organischer Substanzen, die sowohl während der bestimmungsgemäßen Desinfektion aus den abgetöteten Mikroorganismen freigesetzt werden als auch solche, die mit der zu entsorgenden Flüssigkeit in den Geruchsverschluss gelangt sind.

Der erfindungsgemäße selbstdesinfizierenden Geruchsverschluss wird in Abwasserleitungen angeordnet und ist mit Vorrichtungen zu selbsttätiger Desinfektion und Reinigung während des Gebrauches und ohne Unterbrechung der bestimmungsgemäßen Sperrfunktion versehen. Die Vorrichtung zur Reinigung des Geruchsverschlusskörpers ist mindestens ein elektromechanischer Schwinger und die Vorrichtung(en) zur Desinfektion des Geruchsverschlusskörpers ist mindestens eine Vorrichtung ausgewählt aus der Gruppe bestehend aus Heizelementen, UV-C-Strahler, antibakterieller Beschichtung und Ultraschallschwinger. Innerhalb oder außerhalb des Geruchsverschlusskörpers ist mindestens eine Lichtquelle angeordnet. Der Geruchsverschlusskörper ist innen mit einer Titandioxid-Nano-Beschichtung versehen, die durch innerhalb oder außerhalb des Geruchsverschlusskörpers befindliche Lichtquellen aktiviert wird.

Geeignete Geruchsverschlüsse bekannter Bauart sind bevorzugt die in der WO 2000/053857 A1 und der DE 10 2009 042 212 A1 beschriebenen Geruchsverschlüsse.

Selbstdesinfizierende Geruchsverschlüsse reinigen und entkeimen sich selbsttätig und ohne Unterbrechung der Sperrfunktion des Geruchsverschlusses.

Des Weiteren werden während eines Funktionsstillstandes des Selbstdesinfizierenden Geruchsverschlusses aus der Luft eindringende Mikroorganismen bei Kontakt mit der aktiven Titandioxid-Nano-Beschichtung abgetötet. Nach Anregung durch eine Lichtstrahlung erfolgt die Oxidation organischer Substanzen und die Abtötung von Mikroorganismen an der katalytisch aktiven Titandioxid-Nano-Beschichtung selbsttätig.

Die durch die vorliegende Erfindung beschriebene Anwendung der Nano-Titandioxid-Beschichtung ist für Geruchsverschlüsse neu und führt in der technischen Umsetzung zu einem Selbstdesinfizierenden Geruchsverschluss, der die beschriebenen Nachteile der Selbstdesinfizierenden Geruchsverschlüsse nach dem Stand der Technik nicht aufweist.

Nano-Beschichtungen sind durch geringste Partikelgrößen und maximale Oberflächenverhältnisse gekennzeichnet. Die Titandioxid-Nano-Beschichtung ist eine oxidativ-katalytische Beschichtung mit superhydrophilen Eigenschaften, die für ihre katalytische Wirksamkeit selbst einer zusätzlichen Anregung durch Licht niederer Wellenlänge, bevorzugt Licht einer Wellenlänge von 370 bis 450 nm bedarf. Die Beschichtung ist nur aktiv, wenn sie bestrahlt wird, wobei es eine gewisse Nachreaktion gibt. Die Beschichtung ist nur dort aktiv, wo sie bestrahlt wird. Die Vorteile der Titandioxid-Nano-Beschichtung für den erfindungsgemäßen Selbstdesinfizierenden Geruchsverschluss liegen in der gleichzeitigen Abfolge der drei Reaktionsschritte:
a) Abtötung von Mikroorganismen
b) Oxidation der aus den toten Mikroorganismen freigesetzten Organik (u.a. auch Pyrogene)
c) Vermeidung der Biofilmbildung durch Superhydrophilie: die Anhaftung von Partikeln aller Art ist unmöglich.

Die Titandioxid-Nano-Beschichtung wird in einer Ausführungsform durch Dotierung mit chemischen Zusätzen, beispielsweise mit Metall-Ionen, chemisch verändert, so dass auch Lichtstrahlungen mit Wellenlängen oberhalb des UV-A-Bereiches als Aktivierungsstrahlung verwendet werden kann.

Die Wand des erfindungsgemäßen Geruchsverschlusses besteht entweder aus für Licht undurchlässigen Werkstoffen, vorzugsweise Metallen oder Keramik, oder aus für die UV-C-Strahlung und die UVA-Strahlung durchlässigem Material, vorzugsweise Quarzglas, Glas oder Kunststoff.

In einer Ausführungsform ist der Selbstdesinfizierenden Geruchsverschluss mit der Sanitärkomponente über ein Ablauf- oder Standrohrventil verbunden. Die Sanitärkomponente ist vorzugsweise ein Waschbecken, ein Spülbecken, eine Badewanne, eine Duschwanne oder eine Gebärwanne Das Ablauf- oder Standrohrventil ist bevorzugt innen mit einer Titandioxid-Nano-Beschichtung versehen. Die Aktivierung der Titandioxid-Nano-Beschichtung in den Ablauf-oder Standrohrventilen erfolgt entweder von innen durch dort installierte Lichtquellen oder von außen durch eine auf die Öffnung des Ablauf- oder Standrohrventils aufsetzbare Bestrahlungseinheit, die mit mindestens einer Lichtquelle ausgerüstet ist, oder beides gleichzeitig.

Der Anwendung der Titandioxid-Nanotechnologie für Geruchsverschlüsse stand zunächst die komplexe Rohr-Geometrie der Geruchsverschlüsse, die notwendige Verfügbarkeit von Lichtstrahlungen definierter Wellenlängen und Energiegehalte sowie die Stabilität der Titandioxid-Nano-Beschichtung gegenüber der abrasiven Einwirkung durch das fließende Abwasser und die Sperrflüssigkeit entgegen.

Geruchsverschlüsse machen durch ihre spezielle Geometrie und die Verwendung unterschiedlicher Werkstoffe die Anwendung bewährter Verfahren zur Erzeugung hochaktiver Titandioxid-Nano-Beschichtungen wie das Kaltgasspritzverfahren, die Plasmabeschichtung, die Elektroabscheidung, das Spincoating, die thermische Oxidation in einer Sauerstoffatmosphäre und andere unmöglich. Die Anwendung von nanotechnologischen Beschichtungen innerhalb von Geruchsverschlüssen ist daher nicht naheliegend.

Deshalb wird ein modifiziertes Sol-Gel-Verfahren, welches die Beschichtung der Geruchsverschlüsse im Tauchverfahren ermöglicht, verwendet. Das modifizierte Sol-Gel-Verfahren erlaubt die gleichmäßige und gegen Abrasion weitgehend resistente Beschichtung der Geruchsverschlüsse.

Bei dem modifizierten Sol-Gel-Verfahren erfolgt eine Tauchbeschichtung, die aufgrund der Geometrie des Geruchsverschlusses und der hohen Anforderungen an die Abrasionsfestigkeit mehrmals (bis zu 15-mal) wiederholt werden muss. Nach jedem Tauchvorgang im Sol wird die neue Schicht z.B. 1 h bei 130°C getrocknet und nach jedem fünften Tauchvorgang eine thermische Behandlung z.B. bei 250°C durchgeführt. Dieses Verfahren führt zu einer hochaktiven, sehr abrasionsstabilen Beschichtung.

Die spezielle Geometrie von Geruchsverschlüssen erforderte auch eine Optimierung der Installation der LED-Leuchten, um eine gleichmäßige energetische Beaufschlagung der Titandioxid-Nano-Beschichtung, bevorzugt mit ca. 1 mW/cm², zu gewährleisten.

Aufgrund der Geometrie des Geruchsverschlusses werden bevorzugt mehrere UVA-LED-Leuchten eingesetzt, um eine gleichmäßige Bestrahlung der beschichteten Innenwand des Geruchsverschlusses zu ermöglichen. Bei Verwendung von UVA-durchlässigem Glas als Wandmaterial (Wandstärke 1 mm) für den Geruchsverschluss wurden zwei LED-Leuchten mit jeweils 2,2 Watt el. (= 1,8 W radiometrisch) als ausreichend ermittelt, um die maximale Desinfektionskapazität von 1,2 Log/h zu gewährleisten.

Die Verwendung von speziellen Oberflächenvergrößerern und Schikanen dient der Vergrößerung der aktiven Oberfläche der Titandioxid-Nano-Beschichtung. Untersuchungen zur Erhöhung der Oxidationskapazität (= Menge oxidierter organischer Substanz pro ml pro Zeiteinheit) haben zur Entwicklung von Elementen zur Vergrößerung der aktiven Oberfläche (Oberflächenvergrößerer) geführt, die bei Bedarf in den Geruchsverschluss entnehmbar eingebracht werden können.

In einer Ausführungsform sind im Geruchsverschluss-Innenraum ein oder mehrere Oberflächenvergrößerer aus lichtundurchlässigem Material oder lichtdurchlässigen Materialien angeordnet, die ein- oder beidseitig mit einer Titandioxid-Nano-Beschichtung versehen sind, bevorzugt ist das lichtdurchlässige Materiale Glas, Quarzglas oder Kunststoff.

Der Oberflächenvergrößerer besteht bevorzugt aus lichtdurchlässigem Material, vorzugsweise Glas oder Kunststoff. Der Oberflächenvergrößerer ist ein- oder beidseitig mit einer Primer-Beschichtung und der Titandioxid-Nano-Beschichtung versehen. Die Form des Oberflächenvergrößerers kann unterschiedlich sein, wobei er so geformt ist, dass er zu einer Vergrößerung der Oberfläche führt, die mit einer aktiven Titandioxid-Nano-Beschichtung versehen ist. Die Form des Oberflächenvergrößerers ist außerdem so, dass durch die Einbringung in den Geruchsverschluss der hydraulische Querschnitt desselben weitgehend konstant bleibt und damit seine hydraulischen Eigenschaften möglichst wenig verändert werden. Neben der Funktion der Vergrößerung der verfügbaren aktiven Titandioxid-Nano-Beschichtung dient der Oberflächenvergrößerer während der Benutzung des Geruchsverschlusses auch der Wandlung laminarer Strömung in turbulente und somit der Erhöhung der Reaktionsgeschwindigkeit (Desinfektionskapazität). Die Desinfektionskapazität des Selbstdesinfizierenden Geruchsverschlusses ist definiert als die Abnahme lebender Mikroorganismen pro Zeiteinheit (Log-Stufen pro Stunde = Log/h). In eigenen Versuchen konnte die Desinfektionskapazität um 25 bis 35 % erhöht werden im Vergleich zu einem erfindungsgemäßen Geruchsverschluss ohne Oberflächenvergrößerer. Bei den Laboruntersuchungen wurden nicht pathogene grampositive (Staphylococcus aureus) und gramnegative (Pseudomonas aeruginosa) Bakterien verwendet.

In einer weiteren Ausführungsform sind im Geruchsverschluss-Innenraum Schikanen angebracht, deren Oberflächen ebenfalls mit einer Titandioxid-Nano-Beschichtung versehen sind. Die Einbringung von Schikanen erfolgt bevorzugt bei Geruchsverschlusskörpern aus lichtdurchlässigem Material, besonders bevorzugt Glas.

Als Schikanen werden Vorrichtungen, die als "Strömungsstörer" dienen und aus dem Wandmaterial des Reaktors durch in der Regel Eindrücken nach innen hergestellt werden, verwendet. Sie dienen dazu, laminare oder Rotationsströmungen in turbulente Strömungen umzuwandeln. Dadurch wird die Durchmischung der Reaktanten verstärkt und die Reaktionsgeschwindigkeit erhöht. Bevorzugt sind die Schikanen durch Einstülpungen der Wand des Geruchsverschlusses gebildet. In eigenen Versuchen mit nicht pathogenen grampositiven (Staphylococcus aureus) und gramnegativen (Pseudomonas aeruginosa) Bakterien konnte die Desinfektionskapazität um 15 bis 20 % erhöht werden im Vergleich zu einem erfindungsgemäßen Geruchsverschluss ohne Schikanen.

Der erfindungsgemäße Selbstdesinfizierende Geruchsverschluss ermöglicht es bei Beibehaltung der hohen Desinfektionskapazität (Abtötung von 10 Millionen Mikroorganismen pro Milliliter Sperrflüssigkeit innerhalb von 30 Minuten) erfindungsgemäß die beschriebenen Nachteile der Anreicherung mikrobieller Zellinhaltsstoffe in der Sperrflüssigkeit und die schnelle retrograde mikrobielle Kontaminierung der Sperrflüssigkeit durch eine schnelle Vermehrung der über die Luft in die Sperrflüssigkeit eingetragenen Keime und deren spätere Emission als auch den Austritt von organischen Stoffen via Aerosolbildung bei erneuter Benutzung zu vermeiden. Durch die Titandioxid-Nano-Beschichtung wird bei Stillstand der Funktionen Reinigung und Desinfektion eine retrograde mikrobielle Kontaminierung der Sperrflüssigkeit sowohl von der Seite der Abwasserleitung als auch durch die Raumluft durch die oxidativ-desinfizierende Wirkung der Titandioxid-Nano-Beschichtung verhindert.

Teil der Erfindung ist ein Selbstdesinfizierender Geruchsverschluss in Abwasserleitungen mit Vorrichtungen zu selbsttätiger Desinfektion und Reinigung während des Gebrauches und ohne Unterbrechung der bestimmungsgemäßen Sperrfunktion, bei dem die Reinigung durch die Ausrüstung von Geruchsverschlusskörpern bekannter Bauart mit elektromechanischen Schwingern und die Desinfektion durch mit mindestens einem Heizelemente, einem UV-C-Strahler, einer antibakterielle Beschichtung und einem Ultraschallschwinger oder einer Kombination dieser Bauelemente erfolgt, dadurch gekennzeichnet, dass der Geruchsverschlusskörper innen mit einer Titandioxid-Nano-Beschichtung versehen ist, die durch innerhalb oder außerhalb des Geruchsverschlusskörpers befindliche Lichtquellen aktiviert wird.

Im Folgenden wird die Erfindung anhand mehrerer Ausführungsbeispiele näher gekennzeichnet.

### Ausführungsbeispiel 1

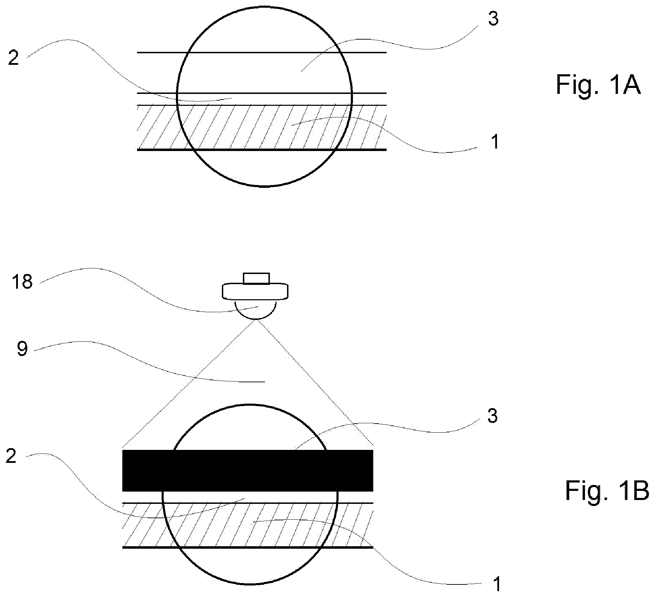

In Fig. 1A und Fig. 1B ist der Aufbau der Nano-Titandioxidschicht 3 anhand eines schematischen Schnittes durch die beschichtete Wand des Geruchsverschlusskörpers 1 dargestellt. Die Wand des Geruchsverschlusskörpers 1, die aus Metall 1A oder aus lichtdurchlässigem Glas 1B oder lichtdurchlässigem Kunststoff besteht, ist innen mit einer Primer-Beschichtung 2 versehen, welcher durch ihre hydrophilen Eigenschaften die feste Haftung der Titandioxid-Nano-Beschichtung 3 auf der hydrophoben Innenwand des Geruchsverschlusses 1A, 1B, ermöglicht. Die zunächst inaktive Titandioxid-Nano-Beschichtung 3 in Fig. 1A wird durch Bestrahlung 9 mit Licht mittels einer Lichtquelle 18 aktiviert (Fig. 1B).

### Ausführungsbeispiel 2

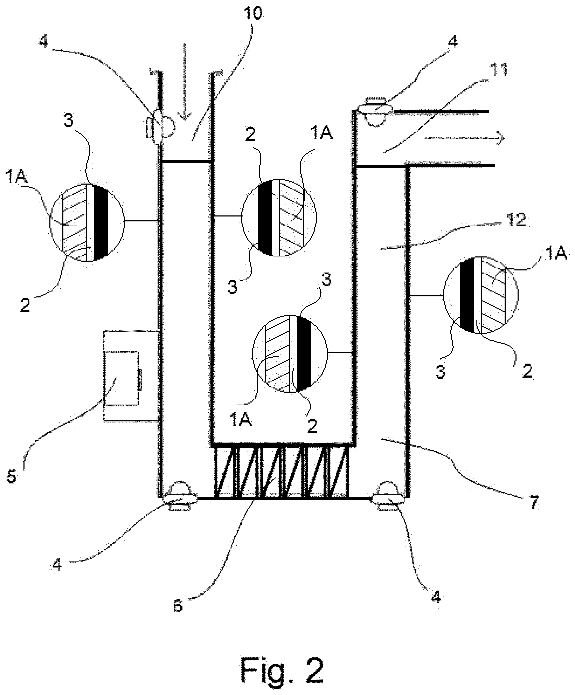

In Fig. 2 ist ein selbstdesinfizierender Geruchsverschluss, erfindungsgemäß aufgebaut aus einem Geruchverschluss-Körper 1, mindestens einem Heizelement zur thermischen Desinfektion 6 und einem elektromechanischen Schwinger 5 zur mechanischen Reinigung, bei dem die Geruchverschluss-Innenwand 1A mit einer Titandioxid-Nano-Beschichtung 3 versehen ist, dargestellt. Die Aktivierung der Titandioxid-Nano-Beschichtung 3 erfolgt durch LED-Lampen 4.Die LED-Lampen 4 sind in der Wand des Geruchsverschlusskörpers 1A befestigt und ragen in die Sperrflüssigkeit 7 hinein. Sie bestrahlen den Geruchsverschlussinnenraum 12 vollständig. Zudem sind weitere LED-Lampen 4 im Zulauf 10 und im Ablauf 11 angeordnet.

### Ausführungsbeispiel 3

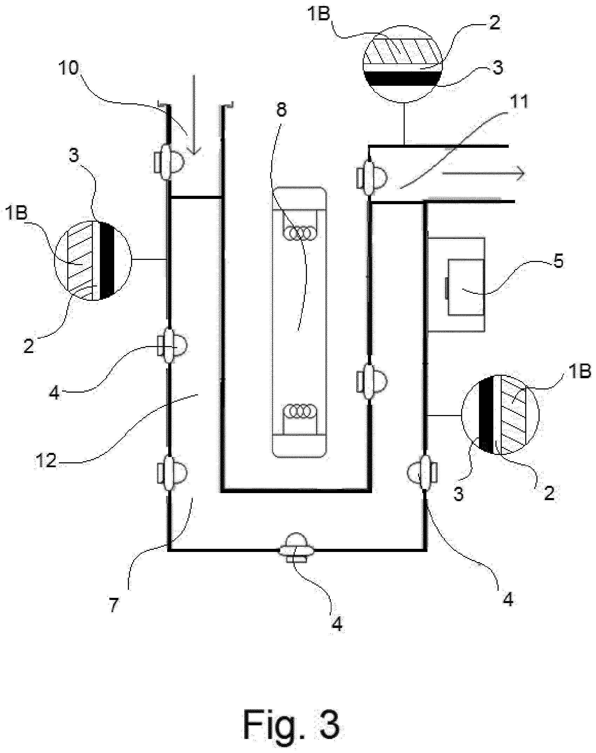

In Fig. 3 ist ein erfindungsgemäßer selbstdesinfizierender Geruchsverschluss, aufgebaut aus einem Geruchverschluss-Körper 1 aus UV-C-Licht durchlässigem Quarzglas 1B, einem UV-C-Strahler 8 zur Desinfektion durch ultraviolettes Licht (UV-C-Strahlung) und einem elektromechanischen Schwinger 5 zur Reinigung, dargestellt. Die Geruchverschluss-Innenwand 1B ist mit einer Titandioxid-Nano-Beschichtung 3 versehen. Die Aktivierung der Titandioxid-Nano-Beschichtung 3 erfolgt durch LED-Lampen 4.

Die LED-Lampen 4 sind in der Wand des Geruchsverschlusskörpers 1B befestigt und ragen in die Sperrflüssigkeit 7 hinein. Zudem sind weitere LED-Lampen 4 im Zulauf 10 und im Ablauf 11 angeordnet.

### Ausführungsbeispiel 4

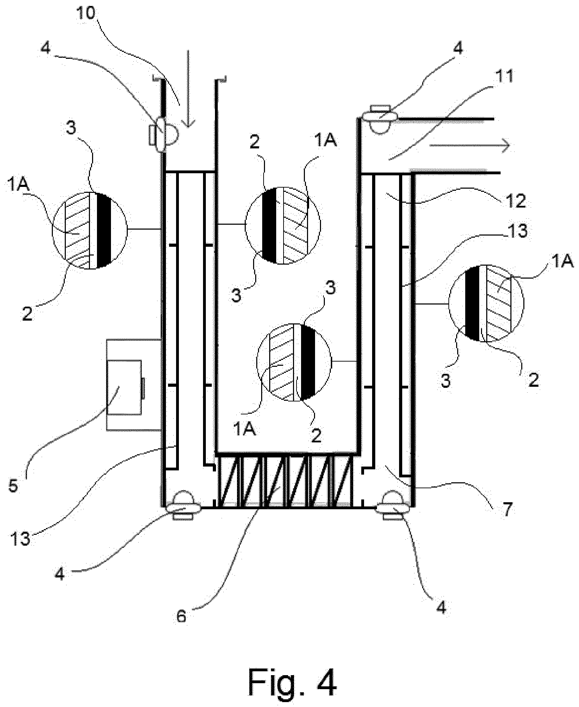

In Fig. 4 ist ein erfindungsgemäßer selbstdesinfizierender Geruchsverschluss, erfindungsgemäß aufgebaut aus einem Geruchverschluss-Körper 1, mindestens einem Heizelement zur thermischen Desinfektion 6 und einem elektromechanischen Schwinger 5 zur Reinigung, bei dem die Geruchverschluss-Innenwand 1A mit einem Primer 2 und einer Titandioxid-Nano-Beschichtung 3 versehen ist, dargestellt. Die Aktivierung der Titandioxid-Nano-Beschichtung 3 erfolgt durch LED-Lampen 4.

Die LED-Lampen 4 sind in der Wand des Geruchsverschlusskörpers 1A befestigt und ragen in die Sperrflüssigkeit 7 hinein. Zudem sind weitere LED-Lampen 4 im Zulauf 10 und im Ablauf 11 angeordnet. Zum Zwecke der Erhöhung der verfügbaren Oxidationskapazität in der Sperrflüssigkeit 7 wird sind Oberflächenvergrößerer 13, deren Oberflächen ebenfalls mit einer Titandioxid-Nano-Beschichtung 3 versehen sind, im Geruchsverschluss-Innenraum 12 eingebracht.

### Ausführungsbeispiel 5

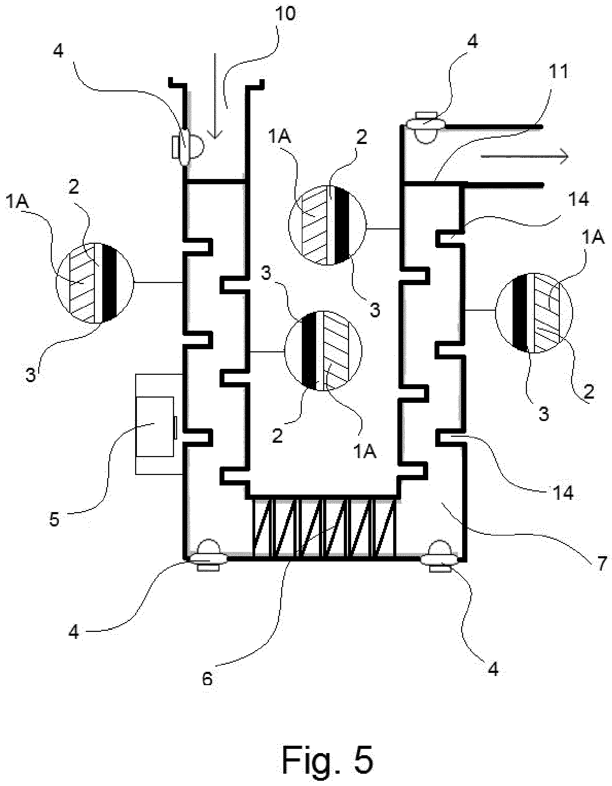

In Fig. 5 ist ein erfindungsgemäßer selbstdesinfizierender Geruchsverschluss dargestellt, aufgebaut aus einem Geruchverschluss-Körper 1, mindestens einem Heizelement zur thermischen Desinfektion 6 und einem elektromechanischen Schwinger 5 zur Reinigung, bei dem die Geruchverschluss-Innenwand 1A mit einer Titandioxid-Nano-Beschichtung 3 versehen ist. Die Aktivierung der Titandioxid-Nano-Beschichtung 3 erfolgt durch LED-Lampen 4. Die LED-Lampen 4 sind in der Wand des Geruchsverschlusskörpers 1A befestigt und ragen in die Sperrflüssigkeit 7 hinein. Zudem sind weitere LED-Lampen 4 im Zulauf 10 und im Ablauf 11 angeordnet. Zum Zwecke der Erhöhung der verfügbaren Oxidationskapazität in der Sperrflüssigkeit 7 sind Schikanen 14, deren Oberflächen ebenfalls mit einer Titandioxid-Nano-Beschichtung 3 versehen sind, in den Geruchsverschluss-Innenraum 12 eingebracht.

### Ausführungsbeispiel 6

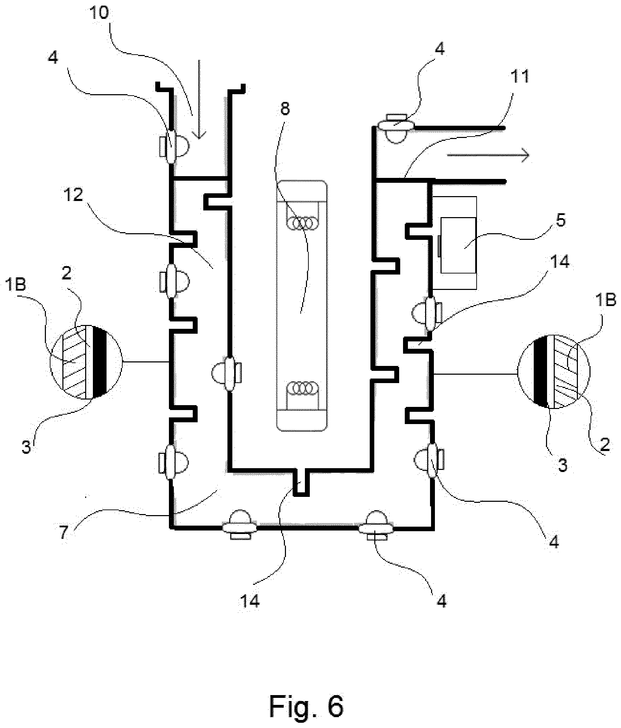

In Fig. 6 ist ein erfindungsgemäßer selbstdesinfizierender Geruchsverschluss dargestellt, aufgebaut aus einem Geruchverschluss-Körper 1B aus UV-C-Licht durchlässigem Quarzglas, einem UV-C-Strahler 8 zur Desinfektion durch ultraviolettes Licht (UV-C-Strahlung) und einem elektromechanischen Schwinger 5 zur Reinigung. Die Geruchverschluss-Innenwand 1B ist mit einer Titandioxid-Nano-Beschichtung 3 versehen. Die Aktivierung der Titandioxid-Nano-Beschichtung 3 erfolgt durch LED-Lampen 4.

Die LED-Lampen 4 sind in der Wand des Geruchsverschlusskörpers 1B befestigt und ragen in die Sperrflüssigkeit 7 hinein. Zudem sind weitere LED-Lampen 4 im Zulauf 10 und im Ablauf 11 angeordnet. Zum Zwecke der Erhöhung der verfügbaren Oxidationskapazität in der Sperrflüssigkeit 7 sind Schikanen 14, deren Oberflächen ebenfalls mit einer Titandioxid-Nano-Beschichtung 3 versehen sind, in den Geruchsverschluss-Innenraum 12 eingebracht.

### Ausführungsbeispiel 7

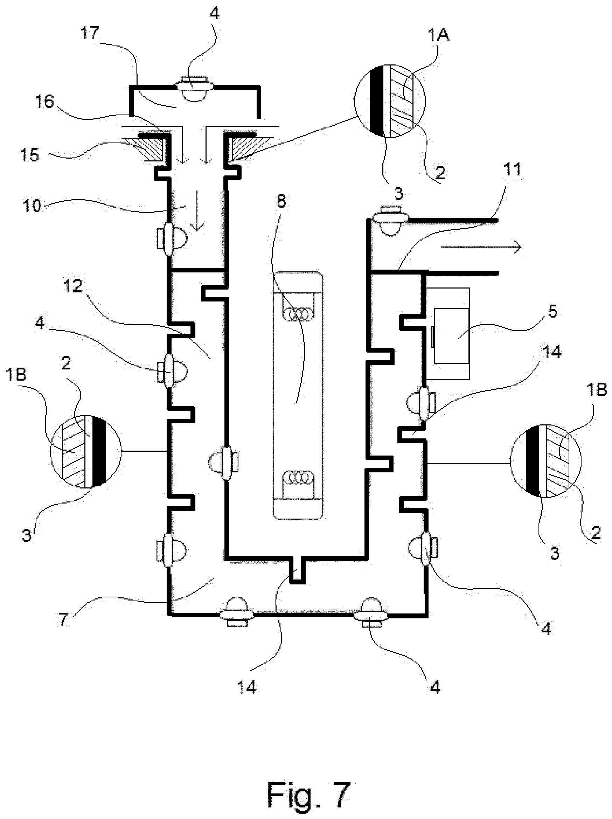

In Fig. 7 ist ein erfindungsgemäßer selbstdesinfizierender Geruchsverschluss dargestellt, aufgebaut aus einem Geruchverschluss-Körper 1B aus UV-C-Licht durchlässigem Quarzglas, einem UV-C-Strahler 8 zur Desinfektion des Geruchsverschluss-Innenraumes 12 durch ultraviolettes Licht UV-C-Strahlung und einem elektromechanischen Schwinger 5 zur Reinigung. Die Geruchverschluss-Innenwand 1B ist mit einer Titandioxid-Nano-Beschichtung 3 versehen. Die Aktivierung der Titandioxid-Nano-Beschichtung 3 erfolgt durch LED-Lampen 4. Die LED-Lampen 4 sind in der Wand des Geruchsverschlusskörpers 1B befestigt und ragen in die Sperrflüssigkeit 7 hinein. Zudem sind weitere LED-Lampen 4 im Zulauf 10 und im Ablauf 11 angeordnet. Zum Zwecke der Erhöhung der verfügbaren Oxidationskapazität in der Sperrflüssigkeit 7 sind Schikanen 14, deren Oberflächen ebenfalls mit einer Titandioxid-Nano-Beschichtung 3 versehen sind, in den Geruchsverschluss-Innenraum 12 eingebracht.

Die Verbindung des Selbstdesinfizierenden Geruchsverschlusses mit der Sanitärkomponente, vorzugsweise dem Waschbecken 15, dem Spülbecken, der Badewanne, der Duschwanne und Gebärwanne erfolgt durch Ablauf- oder Standrohrventile 16, die innen ebenfalls mit einer Titandioxid-Nano-Beschichtung 3 versehen sind. Die Aktivierung der Titandioxid-Nano-Beschichtung 3 in den Ablauf- oder Standrohrventilen 16 erfolgt sowohl von innen mittels der im Geruchsverschluss installierten LED-Lampen 4 als auch von außen durch eine auf die Öffnung des Ablauf- oder Standrohrventils 16 aufsetzbare Bestrahlungseinheit 17, die mit mindestens einer Lichtquelle 4 ausgerüstet ist.

### Ausführungsbeispiel 8

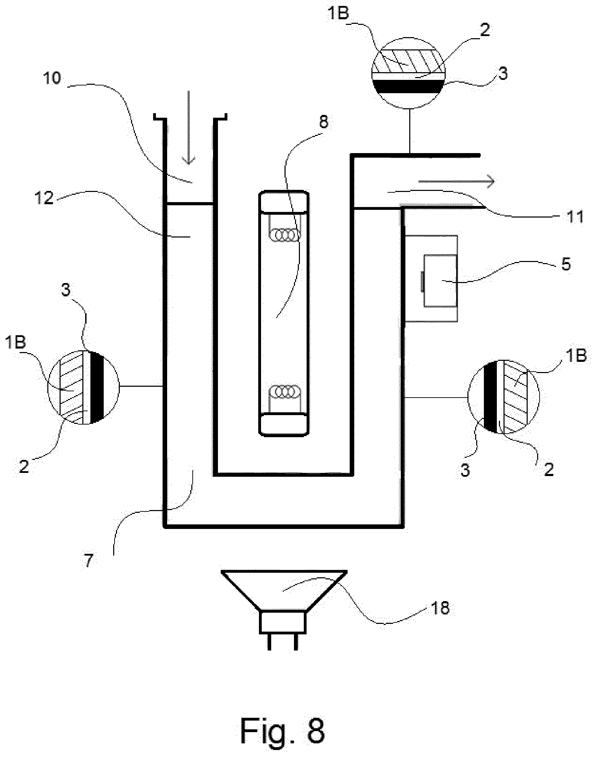

In Fig. 8 ist ein erfindungsgemäßer selbstdesinfizierender Geruchsverschluss, aufgebaut aus einem Geruchverschlusskörper 1 B aus UV-C-Licht durchlässigem Quarzglas, einem UV-C-Strahler 8 zur Desinfektion durch ultraviolettes Licht (UV-C-Strahlung) und einem elektromechanischen Schwinger 5 zur Reinigung, dargestellt. Die Geruchverschluss-Innenwand 1B ist mit einer Titandioxid-Nano-Beschichtung 3 versehen. Die Aktivierung der Titandioxid-Nano-Beschichtung 3 erfolgt durch einen Lichtstrahler 18, der außerhalb des Geruchsverschlusses installiert ist.

### Ausführungsbeispiel 9

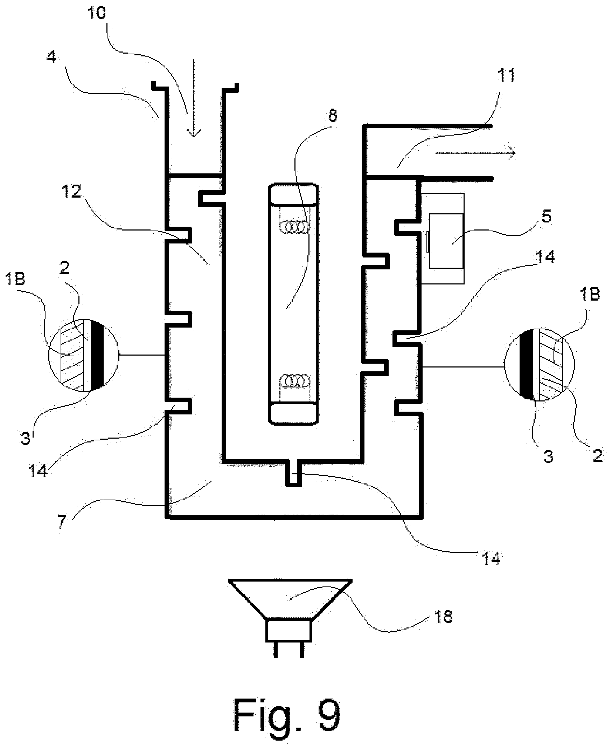

In Fig. 9 ist ein erfindungsgemäßer selbstdesinfizierender Geruchsverschluss, aufgebaut aus einem Geruchverschlusskörper 1 B aus UV-C-Licht durchlässigem Quarzglas, einem UV-C-Strahler 8 zur Desinfektion des Geruchsverschluss-Innenraumes 12 durch ultraviolettes Licht (UV-C-Strahlung) und einem elektromechanischen Schwinger 5 zur Reinigung dargestellt. Der Geruchverschlusskörper aus Quarzglas 1B ist innen mit einer Titandioxid-Nano-Beschichtung 3 versehen. Die Aktivierung der Titandioxid-Nano-Beschichtung 3 erfolgt durch einen Lichtstrahler 18, der außerhalb des Geruchsverschlusses installiert ist. Zum Zwecke der Erhöhung der verfügbaren Oxidationskapazität in der Sperrflüssigkeit 7 sind Schikanen 14 deren Oberflächen ebenfalls mit einer Titandioxid-Nano-Beschichtung 3 versehen sind, in den Geruchsverschluss-Innenraum 12 eingebracht.

**Bezugszeichenliste**

| | |
|---|---|
| Geruchsverschlusskörper | 1 |
| Wand des Geruchsverschlusskörpers aus Metall | 1A |
| Wand des Geruchsverschlusskörpers aus lichtdurchlässigem Glas | 1B |
| Primer-Beschichtung | 2 |
| Titandioxid-Nano-Beschichtung | 3 |
| LED-Lampe | 4 |
| elektromechanischer Schwinger | 5 |
| Heizelement zur thermischen Desinfektion | 6 |
| Sperrflüssigkeit | 7 |
| UV-C-Strahler | 8 |
| Lichtquelle | 9 |
| Zulauf | 10 |
| Ablauf | 11 |
| Geruchsverschluss-Innenraum | 12 |
| Oberflächenvergrößerer | 13 |
| Schikane | 14 |
| Becken oder Wanne | 15 |
| Ablauf- oder Standrohrventil | 16 |
| aufsetzbare Bestrahlungseinheit | 17 |
| Lichtstrahler | 18 |

## Patentansprüche

1. Selbstdesinfizierender Geruchsverschluss für Abwasserleitungen, mit einem Geruchsverschlusskörper (1), mindestens einer Lichtquelle (4, 18) und Vorrichtungen zu selbsttätiger Desinfektion und Reinigung während des Gebrauches und ohne Unterbrechung der Sperrfunktion, wobei die Vorrichtung zur Reinigung des Geruchsverschlusskörpers (1) mindestens ein elektromechanischer Schwinger (5) und die Vorrichtung(en) zur Desinfektion des Geruchsverschlusskörpers (1) mindestens eine antibakterielle Beschichtung und ggf. eine Vorrichtung ausgewählt aus der Gruppe bestehend aus Heizelementen (6), UV-C-Strahler (8), und Ultraschallschwinger ist und wobei die mindestens eine Lichtquelle (4, 18) innerhalb oder außerhalb des Geruchsverschlusskörpers (1) angeordnet ist, **dadurch gekennzeichnet, dass** der Geruchsverschlusskörper (1) innen mit einer Titandioxid-Nano-Beschichtung (3) versehen ist, die die antibakterielle Beschichtung bildet und die durch innerhalb oder außerhalb des Geruchsverschlusskörper (1) befindliche Lichtquellen (4,18) aktiviert wird.

2. Selbstdesinfizierender Geruchsverschluss nach Anspruch 1, **dadurch gekennzeichnet, dass** die Titandioxid-Nano-Beschichtung (3) durch Dotierung mit chemischen Zusätzen, chemisch verändert wird, so dass die Beschichtung auch mit Lichtstrahlungen mit Wellenlängen oberhalb des UV-A-Bereiches aktiviert wird .

3. Selbstdesinfizierender Geruchsverschluss nach Anspruch 1, **dadurch gekennzeichnet, dass** die Wand des Geruchsverschlusses entweder aus für Licht undurchlässigen Werkstoffen, vorzugsweise Metallen oder Keramik (1A), oder aus für die UV-C-und/oder UVA-Strahlung durchlässigem Material, vorzugsweise Quarzglas (1B), Glas oder Kunststoff, besteht.

4. Selbstdesinfizierender Geruchsverschluss nach einem der vorhergehenden Ansprüche, **dadurch gekennzeichnet, dass** im Geruchsverschluss-Innenraum (12) ein oder mehrere Oberflächenvergrößerer (13) aus lichtundurchlässigem Material (1A) oder lichtdurchlässigen Materialien, bevorzugt aus Glas und Quarzglas oder Kunststoff eingebracht werden und die Oberflächenvergrößerer ein- oder beidseitig mit einer Titandioxid-Nano-Beschichtung (3) versehen sind.

5. Selbstdesinfizierender Geruchsverschluss nach einem der vorhergehenden Ansprüche, **dadurch gekennzeichnet, dass** im Geruchsverschluss-Innenraum (12) Schikanen (14), deren Oberflächen ebenfalls mit einer Titandioxid-Nano-Beschichtung (3) versehen sind, angebracht sind.

6. Selbstdesinfizierender Geruchsverschluss nach einem der vorhergehenden Ansprüche, **dadurch gekennzeichnet, dass** Ablauf- oder Standrohrventile (16), die den selbstdesinfizierenden Geruchsverschluss mit der Sanitärkomponente verbinden, innen mit einer Titandioxid-Nano-Beschichtung (3) versehen sind.

7. Selbstdesinfizierender Geruchsverschluss nach Anspruch 6, **dadurch gekennzeichnet, dass** die Aktivierung der Titandioxid-Nano-Beschichtung (3) in den Ablauf- oder Standrohrventilen (16) entweder von innen durch dort installierte Lichtquellen oder von außen durch eine auf die Öffnung des Ablauf-oder Standrohrventils (16) aufsetzbare Bestrahlungseinheit (17), die mit mindestens einer Lichtquelle ausgerüstet ist, oder beides gleichzeitig erfolgt.

8. Selbstdesinfizierender Geruchsverschluss nach einem der vorhergehenden Ansprüche, **dadurch gekennzeichnet, dass** die auf der Innenwand des Geruchsverschlusskörpers aufgebrachte Titandioxid-Nano-Beschichtung eine katalytisch-oxidativ wirksame, superhydrophilen Titandioxid-Nano-Beschichtung ist.

9. Selbstdesinfizierender Geruchsverschluss nach einem der vorhergehenden Ansprüche, **dadurch gekennzeichnet, dass** die Wand des Geruchsverschlusskörpers, die aus Metall oder aus lichtdurchlässigem Glas oder lichtdurchlässigem Kunststoff besteht, innen mit einer Primer-Beschichtung (2) versehen, auf der die Titandioxid-Nano-Beschichtung (3) aufgebracht ist.

## Claims

1. Self-disinfecting drain trap for drainage pipes having a drain trap body (1), at least one light source (4, 18), and devices for automatic disinfection and cleaning during use and without an interruption of the barrier function, wherein the device for cleaning the drain trap body (1) is at least one electromechanical vibrator (5) and the device(s) for disinfection of the drain trap body (1) are at least one antibacterial coating and, optionally, a device selected from the group comprising heating elements (6), UV-C emitters (8), and ultrasonic vibrators, and wherein the at least one light source (4, 18) is arranged inside of or outside of the drain trap body (1), **characterized in that** the drain trap body (1) is provided on the inside with a titanium dioxide nano-coating (3), which forms the antibacterial coating and which is activated by the light source (4, 18) located inside of or outside of the drain trap body.

2. Self-disinfecting drain trap according to Claim 1, **characterized in that** the titanium dioxide nano-coating (3) is chemically altered by doping with chemical additives so that the coating is also activated by light radiation with wavelengths above the UV-A range.

3. Self-disinfecting drain trap according to Claim 1, **characterized in that** the wall of the drain trap comprises either materials non-permeable to light, preferably metals or ceramics (1A), or materials permeable to UV-C and/or UV-A radiation, preferably quartz glass (1B), glass, or plastic material.

4. Self-disinfecting drain trap according to any one of the preceding claims, **characterized in that** one or more surface increasers (13) made of light-impermeable material (1A) or light-permeable materials, preferably made of glass and quartz glass or plastic material, are incorporated in the drain trap interior (12), and the surface increasers are provided on one or two sides with a titanium dioxide nano-coating (3).

5. Self-disinfecting drain trap according to any one of the preceding claims, **characterized in that** baffles (14), whose surfaces are likewise provided with a titanium dioxide nano-coating (3), are disposed in the interior (12) of the drain trap.

6. Self-disinfecting drain trap according to any one of the preceding claims, **characterized in that** the drain or stand pipe valves (16), which connect the self-disinfecting drain trap to the sanitary components, are provided with a titanium dioxide nano-coating (3) on the inside.

7. Self-disinfecting drain trap according to Claim 6, **characterized in that** the activation of the titanium dioxide nano-coating (3) in the drain or stand pipe valves (16) is carried out either from the inside by light sources installed there, or from the outside by an irradiation unit (17), which is equipped with at least one light source and is mountable on the opening of the drain or stand pipe valve (16), or by both simultaneously.

8. Self-disinfecting drain trap according to any one of the preceding claims, **characterized in that** the titanium dioxide nano-coating applied on the inner wall of the drain trap body is a super-hydrophilic titanium dioxide nano-coating with a catalytic oxidative effect.

9. Self-disinfecting drain trap according to any one of the preceding claims, **characterized in that** the wall of the drain trap body, which comprises metal or light-permeable glass or light-permeable plastic material, is provided on the inside with a primer coating (2), on which the titanium dioxide nano-coating (3) is applied.

## Revendications

1. Siphon auto-désinfectant destiné à des canalisations d'eaux usées, comprenant un corps de siphon (1), au moins une source lumineuse (4, 18) et des dispositifs de désinfection et de nettoyage automatiques pendant l'utilisation et sans interruption de la fonction de barrière, sachant que le dispositif destiné au nettoyage du corps de siphon (1) est au moins un vibreur électromécanique (5), et le(s) dispositif(s) de désinfection du corps de siphon (1) est/sont au moins un revêtement antibactérien et, le cas échéant, un dispositif sélectionné dans le groupe comprenant des éléments chauffants (6), un radiateur UV-C (8) et un générateur d'ultrasons, et la source lumineuse (4, 18), au nombre d'au moins une, étant disposée à l'intérieur ou à l'extérieur du corps de siphon (1), **caractérisé en ce que** le corps de siphon (1) est doté à l'intérieur d'un nanorevêtement de dioxyde de titane (3) qui constitue le revêtement antibactérien et qui est activé par des sources lumineuses (4, 18) se trouvant à l'intérieur ou à l'extérieur du corps de siphon (1).

2. Siphon auto-désinfectant selon la revendication 1, **caractérisé en ce que** le nanorevêtement de dioxyde de titane (3) est modifié chimiquement par dopage avec des additifs chimiques, de telle sorte que le revêtement est également activé par des rayonnements lumineux avec des longueurs d'ondes supérieures au domaine des UV-A.

3. Siphon auto-désinfectant selon la revendication 1, **caractérisé en ce que** la paroi du siphon est faite soit de matériaux imperméables à la lumière, de préférence de métaux ou de céramiques (1A), soit de matériaux laissant passer le rayonnement UV-C et/ou UV-A, de préférence de verre de quartz (AB), de verre ou de matière synthétique.

4. Siphon auto-désinfectant selon l'une des revendications précédentes, **caractérisé en ce qu'**un ou plusieurs éléments d'augmentation de surface(13) faits d'un matériau imperméable à la lumière (1A) ou de matériaux laissant passer la lumière, de préférence de verre et de verre de quartz ou de matière synthétique, sont réalisés dans l'espace intérieur de siphon (12), et que les éléments d'augmentation de surface sont pourvus d'un nanorevêtement de dioxyde de titane (3) sur une face ou sur les deux faces.

5. Siphon auto-désinfectant selon l'une des revendications précédentes, **caractérisé en ce qu'**il est prévu dans l'espace intérieur de siphon (12), des chicanes (14) dont les surfaces sont également dotées d'un nanorevêtement de dioxyde de titane (3).

6. Siphon auto-désinfectant selon l'une des revendications précédentes, **caractérisé en ce que** des bondes d'évacuation ou des vannes de colonne montante (16), qui relient le siphon auto-désinfectant à l'élément sanitaire, sont pourvues à l'intérieur d'un nanorevêtement de dioxyde de titane (3).

7. Siphon auto-désinfectant selon la revendication 6, **caractérisé en ce que** l'activation du nanorevêtement de dioxyde de titane (3) dans les bondes d'évacuation ou les vannes de colonne montante (16) s'effectue soit de l'intérieur, à l'aide de sources lumineuses installées à l'intérieur, soit de l'extérieur, à l'aide d'une unité d'irradiation (17) qui peut être posée sur l'ouverture de la bonde d'évacuation ou de la vanne de colonne montante (16) et qui est équipée d'au moins une source lumineuse, soit les deux en même temps.

8. Siphon auto-désinfectant selon l'une des revendications précédentes, **caractérisé en ce que** le nanorevêtement de dioxyde de titane appliqué sur la paroi intérieure du corps de siphon est un nanorevêtement de dioxyde de titane superhydrophile à action catalytique oxydative.

9. Siphon auto-désinfectant selon l'une des revendications précédentes, **caractérisé en ce que** la paroi du corps de siphon, qui est faite de métal ou de verre laissant passer la lumière ou de matière synthétique laissant passer la lumière, est pourvue à l'intérieur d'un revêtement d'un promoteur d'adhésion (2) sur lequel est appliqué le nanorevêtement de dioxyde de titane (3).
